# EUROPEAN PATENT SPECIFICATION

(11) **EP 3 428 053 B1**
(45) Date of publication and mention of the grant of the patent: **12.02.2020**
(21) Application number: 18382502.5
(22) Date of filing: 06.07.2018
(51) Int. Cl.: B63B 35/28, B63B 25/12, B63B 27/00, B63B 27/24, F25J 1/02, B63B 25/00, B63B 27/34, B63B 25/14

(54) **MARITIME SYSTEM FOR THE TRANSPORT AND DISTRIBUTION OF LIQUEFIED NATURAL GAS LNG**
MARITIMES SYSTEM FÜR DEN TRANSPORT UND DIE VERTEILUNG VON VERFLÜSSIGTEM ERDGAS (LNG)
SYSTÈME MARITIME POUR LE TRANSPORT ET LA DISTRIBUTION DE GAZ NATUREL LIQUÉFIÉ (GNL)

(30) Priority: 14.07.2017 ES 201730935
(43) Date of publication of application: 16.01.2019
(73) Proprietor: Naturgy Energy Group S.A., 08003 Barcelona (ES)
(72) Inventor: DUVISON SANTIAGO, Miguel, 28045 MADRID (ES); MORENO BLANES, José, Miguel, 28660 BOADILLA DEL MONTE (Madrid) (ES); FERRER RIPOLL, Carlos, 28033 MADRID (ES); LÓPEZ GARRIDO, Gema, 28033 MADRID (ES); ESPARBE MAINAR, Jordi, Josep, 08960 SANT JUST DESVERN (Barcelona) (ES)
(74) Representative: Herrero & Asociados, S.L.

(56) References cited:
- EP-A1- 2 597 025
- WO-A1-2010/042073
- JP-A- 2006 046 460

## Description

### Technical Field of the Invention

The invention is comprised in the technical field of natural gas transport and logistics systems, more specifically in the transport of liquefied natural gas LNG from gas fields or gas-producing countries to end customers or consumers, when said consumers are located in locations that are hard to access by sea.

The system for transport and distribution of the invention is also comprised in maritime means used for transporting large amounts of gas by means of large methane carriers that travel between gas extraction fields and countries consuming said gas.

### Prior State of the Art

Liquefied natural gas LNG is transported from natural gas-producing countries to consuming countries using large ships referred to as methane or gas carriers. In these carriers, the gas must be kept at a temperature of -161 °C for long distances, the natural gas being transported in liquid state at a pressure higher than atmospheric pressure. Large methane or gas carriers have a load capacity between 30,000 and 266,000 m³.

LNG is transported in tanks that withstand these low temperatures, where it is kept at the temperature at which it was loaded, i.e., at about -161°C, throughout the entire voyage, but depending on its temperature and pressure, a part of the liquid evaporates due to boiling. The evaporated gas is often used to propel the carrier, either by consuming it in boilers or using it in engines which use the gas as fuel.

Often when unloading the transported gas in the port, a small amount of load is left in the tanks and it will keep the tanks cold as it gradually evaporates during the journey, where only a short, more intense, final cooling is required before loading the LNG again. This is achieved with that same remaining load, extracting it from the tanks, which load cools the tanks to the temperature required for loading as it evaporates.

These large methane or gas carriers require ports with a large draft and furthermore, due to the load they transport, they usually load and unload liquefied natural gas in loading terminals away from ports that are connected to onshore areas through pipes.

Patent application PCT WO2016/036690 relating to a system for marine transportation of cryogenic hydrocarbons is known, i.e., it relates to a small-scale transportation of liquefied natural gas, a system which includes a plurality of barges with liquefied gas-containing tanks having a capacity of 25,000 m³ or less, and a semisubmersible transfer ship, these barges cooperating with the semisubmersible ship for distributing gas to onshore installations where the liquefied gas is unloaded and regasified. This system makes it easier to supply natural gas to coastal areas with a small depth, which is less than 10 meters, making it suitable for use under these circumstances; however, a port infrastructure for storing liquefied natural gas, and even a regasification plant from which gas is distributed through pipes to the end customer or consumer, is still required.

The problem that may arise occurs when the end customers or consumers are located, for example, in widely scattered archipelagos or islands where building those port installations in each and every one of those places is not profitable as it is not worthwhile economically speaking, making it impossible to supply liquefied natural gas to a very large group of customers that are scattered throughout those islands.

JP2006046460 (A) relates to a system where at a LNG primary receiving base, LNG is filled in a special LNG transport bulk and the bulk is loaded on a LNG bulk transport ship and transported to a LNG secondary receiving base. At the LNG secondary receiving base, the bulk is used as a storage LNG tank as it is. No need therefore exists for a LNG storage tank at the LNG secondary receiving base. A LNG bulk required to be refilled is loaded on the LNG bulk transport ship at the LNG secondary receiving base and returned to the LNG primary receiving base.

WO2010042073 (A1) relates to methods and systems disclosed provide a cost efficient supply chain for natural gas, thereby enabling monetization of smaller natural gas sources and supply of natural gas to regions with low demand.

### Description of the Invention

The present invention relates to a maritime system for the transport and distribution of liquefied natural gas LNG that is intended for supplying said gas to customers or consumers that are scattered in isolated places, such as islands, for example, and to whom a supply cannot be provided through gas pipelines due to the lack of profitability. This system for transport and distribution comprises:
- a large LNG-supplying entity
- at least one small LNG transport and distribution carrier, hereinafter a small carrier, which receives a supply of liquefied natural gas LNG from the large LNG-supplying entity and has the capacity to anchor in areas close to the coast
- at least one tanker truck-transporting barge, comprising
- a connection module for connecting the barge to the small LNG carrier
- at least one LNG distribution module
- at least one LNG loading module for loading LNG into tanker trucks fed by the LNG distribution module
- tanker truck barge access means
- tanker truck barge exit means

The tanker truck-transporting barge travels between the small LNG carrier and the dock arranged onshore, where it makes the departure and subsequent return of the tanker trucks for distributing LNG among end customers easier. With this system, it is not necessary to have port installations for storing gas and distributing it to end customers or consumers since the tanker trucks are free to travel inland to the end customer or consumer, where the customer may be an electric power generation plant that uses the gas as a means for producing power either through turbines or combustion engines, a consumer that may be a plant for the regasification and piped distribution of gas to small end consumers, an end customer or consumer that may be a hotel complex or hospital, etc.

Expensive infrastructures existing in ports for the storage and distribution of gas, infrastructures that must be repeated in areas where there are several islands with potential gas consumers, for example, are avoided with this system.

The large LNG-supplying entity can be a large transportation ship with an LNG transport capacity of more than 30,000 m³, or an LNG export terminal, i.e., a large-scale LNG storage and supply. These LNG-supplying entities include, among others, large methane carriers which may reach and exceed 200,000 m³ of gas and are often used for transporting LNG from natural gas-producing countries and consuming countries. If it is relatively close to the place where distribution will take place, LNG export terminals of those normally used for loading large methane carriers can be used since these terminals are connected with fields for the extraction and treatment of gas before the export thereof.

This large LNG-supplying entity provides a supply to at least one small LNG carrier which is located close to the coast or islands of the LNG supply area of influence, which small carriers are so called because they have an LNG transport capacity of less than 30,000 m³, which is much less than the capacity of large methane carriers. These small LNG carriers used receive a supply from the large LNG-supplying entity which refills the LNG storage tanks thereof and can head to areas with a smaller depth and have larger areas of influence than the large methane carrier.

The small LNG carrier supplies gas to the barges for carrying tanker trucks, said at least one barge for carrying tanker trucks travelling between the small LNG carrier and the different docks or tanker truck unloading positions on the coast or in the islands where the supply is to be provided, making it easier for LNG-loaded trucks to get off the barge to the customer or consumer and for the unloaded tanker trucks to return to the barge.

The tanker trucks are filled with liquefied natural gas, and when the barge for carrying trucks approaches the port, it makes it easier for the LNG-loaded tanker trucks, which will travel on the roads to the end consumer, to get off. Once the gas is unloaded, the tanker trucks return to the port, where they will again go onboard the barge, waiting to be refilled when said barge returns to the small LNG carrier.

The barge for carrying trucks is adapted for containing multiple tanker trucks, each of them located on its respective loading position and receives a supply from the loading module. The trucks will access the carrier by rolling and get off the barge also by rolling, so the barge will have means that make the passage of the tanker trucks by rolling easier when they reach a port.

The intermediate or end customer may be an LNG regasification plant from which gas is distributed by means of pipes, an electric generation plant using gas turbines or steam turbines, where said steam is generated by the combustion of the gas, these turbines being those which move electric power generators, or internal combustion engines that burn natural gas as fuel. The end customer or consumer can be, for example, a hotel or tourist complex or group of homes having centralized storage tanks for natural gas that is then distributed throughout the entire complex, or end customers having a small storage cistern tank for their own use.

This system allows for great versatility as it allows the liquefied natural gas to reach places where the consumers are far away or isolated, for example, on islands, where no other system would be competitive or versatile for distributing said liquefied natural gas.

### Brief Description of the Drawings

For the purpose of helping to better understand the features of the invention according to a preferred practical thereof embodiment, a series of drawings is attached as an integral part of said description, in which the following is depicted with an illustrative and non-limiting character:
Figure 1 schematically depicts the process the natural gas follows from extraction to final consumption.
Figure 2 shows a typical installation of an LNG loading terminal.
Figure 3 shows a map of islands in which there is a population and scattered consumers where LNG cannot be used at present due to the lack of gas storage and distribution infrastructures.
Figure 4 schematically depicts the elements integrated in the system of the invention.

### Detailed Description of a Preferred Embodiment of the Invention

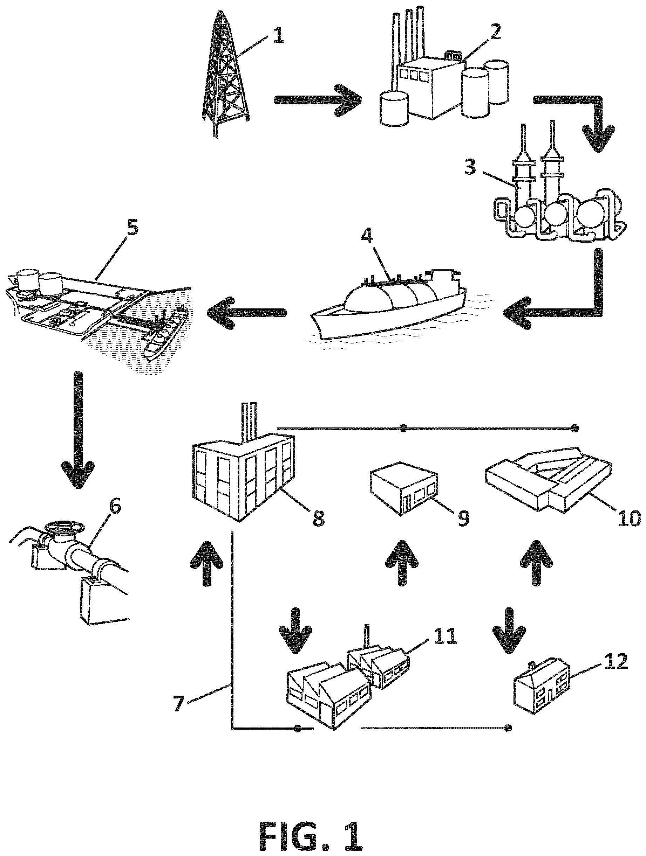

Figure 1 depicts a schematic process of the process the natural gas follows from extraction in wells (1) that can be found onshore or on maritime platforms, where said natural gas is a mixture of hydrocarbons, mainly methane, ethane, propane and butane, that is treated in treatment plants (2) before being passed to the liquefaction plant (3) where the gas is made liquid by means of the liquefaction process, i.e., the method through which natural gas at normal temperature and pressure is cooled to a very low temperature in order to change its physical state from gas to liquid, thus making safe and efficient long-distance transport easier. The liquefaction process mainly has two phases, the first phase is cooling and condensation and the second phase is called "flashing"; the pressure drops almost to atmospheric pressure in the last process.

Once it has been liquefied in the liquefaction plant (3), the gas is ready to be safely and efficiently transported long distances, for example, with large methane or gas carriers (4) that transport it to the unloading areas or countries, where the liquefied natural gas is unloaded in a regasification plant (5) where the gas is distributed through pipes (6) to consumption centers (7) such as power generating stations (8), small industries (9), shopping centers (10), industries (11) and homes (12), for example.

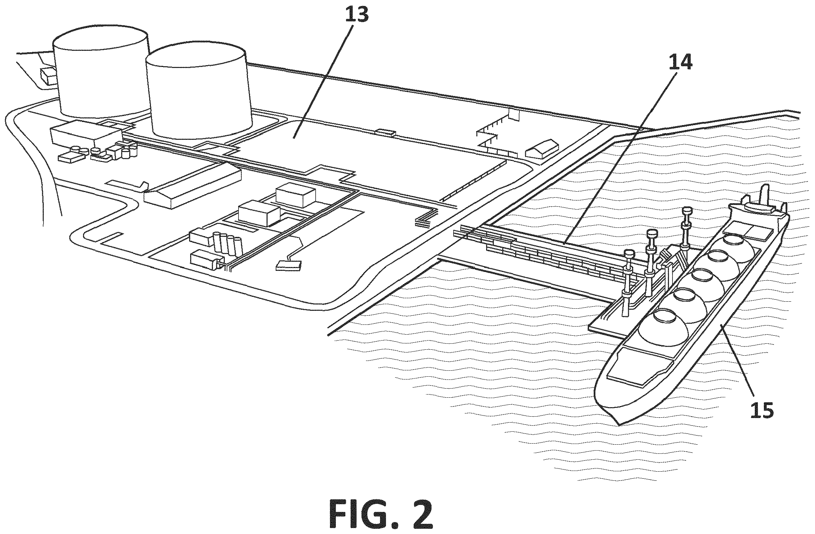

A typical installation of an LNG loading terminal can be seen in Figure 2, where said installation consists of onshore installations (13) made up of liquefied natural gas storage tanks, natural gas liquefaction equipment, a maritime terminal (14) connecting with the berthing dock of the large methane or gas carrier (15) that will transport the load of liquefied natural gas LNG.

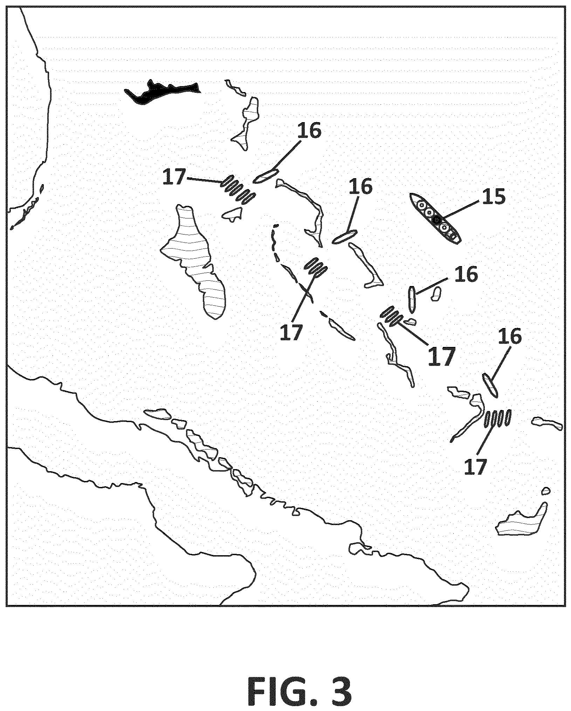

Figure 3 shows an actual map of islands in the Caribbean Sea where a population and scattered consumers are present and where LNG cannot be distributed in a widespread manner at present due to the lack of gas storage and distribution infrastructures. This depiction of the map would allow more clearly seeing the importance of the system for the transport and distribution of LNG of the present invention, for which there is a large methane carrier (15) strategically located in the area to be covered, small LNG carriers (16) having an LNG capacity equal to or less than 30,000 m³ that receive a supply from the larger methane carrier, and a multiplicity of barges for carrying tanker trucks (17) which must reach the ports of each of the islands, unload the tanker trucks which will supply LNG to the end customers or consumers distributed throughout the multiplicity of islands in the area.

In certain locations close to LNG-producing countries, there may be distances between the LNG export terminal and the end consumers, where the large methane carrier (15) is replaced with small LNG carriers (16).

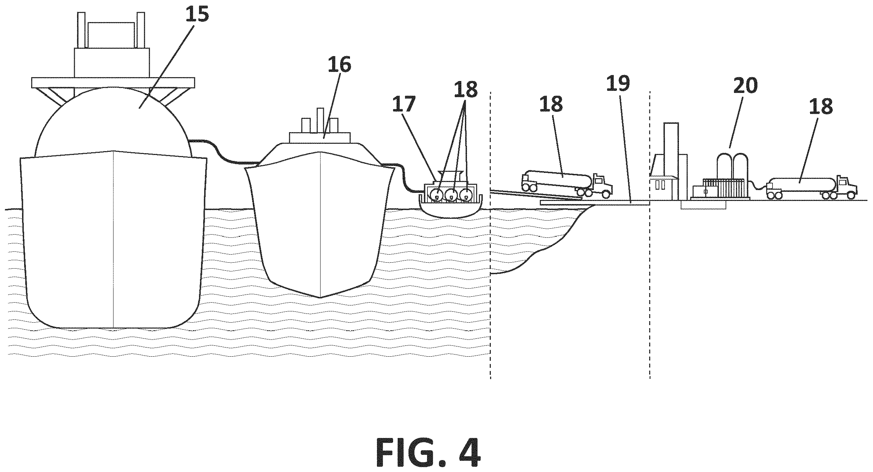

Figure 4 schematically depicts the elements integrated in the system of the invention which are made up of a large methane carrier (15) with an LNG transport capacity of more than 30,000 m³, reaching capacities greater than 200,000 m³. This carrier provides supply to multiple small LNG carriers (16) with an LNG capacity equal to or less than 30,000 m³, and multiple barges for carrying tanker trucks (17) receive supply from each of the small LNG carriers, the purpose of which is to transport tanker trucks (18) between the small LNG carrier (16) and the port (19) for unloading the tanker trucks (18), so that LNG is unloaded from that moment on to the end customer or consumer (20) which has been depicted in the mentioned drawing as a regasification and distribution plant for distribution among end consumers, but it may be any other type of LNG-consuming customer.

## Claims

1. Maritime system for the transport and distribution of liquefied natural gas LNG comprising
- a large LNG-supplying entity
- at least one small LNG carrier (16) which receives a supply of liquefied natural gas LNG from the large LNG-supplying entity and has the capacity to anchor in areas close to the coast
- at least one tanker truck-transporting barge (17), comprising
- a connection module for connecting the barge to the small LNG carrier
- at least one LNG distribution module
- at least one LNG loading module for loading LNG into tanker trucks (18) fed by the LNG distribution module
- tanker truck barge access means
- tanker truck barge exit means
wherein the tanker truck-transporting barge travels between the small LNG carrier (16) and the port (19), where the dock arranged onshore makes the departure and subsequent return of the tanker trucks (18) for distributing LNG among end customers easier.

2. Maritime system for the transport and distribution of liquefied natural gas LNG according to claim 1, **characterized in that** the large LNG-supplying entity is a large methane carrier (4) (15) with an LNG transport capacity of more than 30,000 m³.

3. Maritime system for the transport and distribution of liquefied natural gas LNG according to claim 1, **characterized in that** the large LNG-supplying entity is an LNG export terminal.

4. Maritime system for the transport and distribution of liquefied natural gas LNG according to claim 1, **characterized in that** the large LNG-supplying entity provides a supply to at least one small LNG carrier (16) which is located close to the coast or islands of the LNG supply area of influence.

5. Maritime system for the transport and distribution of liquefied natural gas LNG according to claim 1, **characterized in that** the at least one small LNG carrier (16) has an LNG transport capacity of less than 30,000 m³.

6. Maritime system for the transport and distribution of liquefied natural gas LNG according to claims 1 and 5, **characterized in that** the barge (17) for carrying tanker trucks travels between the small LNG carrier (16) and the different docks or tanker truck unloading positions on the coast or in the islands where supply is to be provided, making it easier for LNG-loaded tanker trucks (18) to get off the barge (17) for carrying tanker trucks and for the unloaded tanker trucks (18) to return to the barge (17) for carrying tanker trucks.

7. Maritime system for the transport and distribution of liquefied natural gas LNG according to claim 6, **characterized in that** the LNG-loaded tanker truck (18) supplies its load to consumption centers (7) which are both LNG and gas customers.

8. Maritime system for the transport and distribution of liquefied natural gas LNG according to claim 7, **characterized in that** the customer is an LNG consumer.

9. Maritime system for the transport and distribution of liquefied natural gas LNG according to claim 7, **characterized in that** the customer is a gas consumer.

## Patentansprüche

1. Maritimes System für den Transport und die Verteilung von Flüssigerdgas, LNG (Liquefied Natural Gas), umfassend:
- eine große LNG-Versorgungseinheit,
- mindestens einen kleinen LNG-Transporter (16), der eine Versorgung mit Flüssigerdgas, LNG, von der großen LNG-Versorgungseinheit empfängt und die Fähigkeit besitzt, in küstennahen Bereichen zu ankern,
- mindestens einen Tankwagen transportierenden Lastkahn (17), umfassend:
- ein Anschlussmodul zum Anschließen des Lastkahns an den kleinen LNG-Transporter,
- mindestens ein LNG-Verteilungsmodul,
- mindestens ein durch das LNG-Verteilungsmodul gespeistes LNG-Verlademodul zum Verladen von LNG in Tankwagen (18),
- Lastkahn-Zufahrtmittel für Tankwagen,
- Lastkahn-Abfahrtmittel für Tankwagen,
wobei der Tankwagen transportierende Lastkahn zwischen dem kleinen LNG-Transporter (16) und dem Hafen (19) pendelt, wobei das an Land angeordnete Dock die Abfahrt und die anschließende Rückkehr der Tankwagen (18) zum Verteilen von LNG unter Endkunden erleichtert.

2. Maritimes System für den Transport und die Verteilung von Flüssigerdgas, LNG, nach Anspruch 1, **dadurch gekennzeichnet, dass** es sich bei der großen LNG-Versorgungseinheit um einen großen Methantransporter (4) (15) mit einer LNG-Transportkapazität von mehr als 30.000 m³ handelt.

3. Maritimes System für den Transport und die Verteilung von Flüssigerdgas, LNG, nach Anspruch 1, **dadurch gekennzeichnet, dass** es sich bei der großen LNG-Versorgungseinheit um eine Umschlaganlage für den LNG-Export handelt.

4. Maritimes System für den Transport und die Verteilung von Flüssigerdgas, LNG, nach Anspruch 1, **dadurch gekennzeichnet, dass** die große LNG-Versorgungseinheit eine Versorgung für mindestens einen kleinen LNG-Transporter (16) bereitstellt, der sich in der Nähe der Küste oder von Inseln des Einflussgebiets der LNG-Versorgung befindet.

5. Maritimes System für den Transport und die Verteilung von Flüssigerdgas, LNG, nach Anspruch 1, **dadurch gekennzeichnet, dass** der mindestens eine kleine LNG-Transporter (16) eine LNG-Transportkapazität von weniger als 30.000 m³ aufweist.

6. Maritimes System für den Transport und die Verteilung von Flüssigerdgas, LNG, nach den Ansprüchen 1 und 5, **dadurch gekennzeichnet, dass** der Lastkahn (17) zum Transportieren von Tankwagen zwischen dem kleinen LNG-Transporter (16) und den verschiedenen Docks oder Tankwagen-Entladestellen an der Küste oder auf den Inseln pendelt, wo eine Versorgung bereitgestellt werden soll, wodurch das Verlassen des Lastkahns (17) zum Transportieren von Tankwagen für mit LNG beladene Tankwagen (18) sowie die Rückkehr der entladenen Tankwagen (18) zu dem Lastkahn (17) zum Transportieren von Tankwagen erleichtert werden.

7. Maritimes System für den Transport und die Verteilung von Flüssigerdgas, LNG, nach Anspruch 6, **dadurch gekennzeichnet, dass** der mit LNG beladene Tankwagen (18) seine Ladung an Verbrauchszentren (7) liefert, bei denen es sich sowohl um LNG- als auch um Gaskunden handelt.

8. Maritimes System für den Transport und die Verteilung von Flüssigerdgas, LNG, nach Anspruch 7, **dadurch gekennzeichnet, dass** es sich bei dem Kunden um einen LNG-Verbraucher handelt.

9. Maritimes System für den Transport und die Verteilung von Flüssigerdgas, LNG, nach Anspruch 7, **dadurch gekennzeichnet, dass** es sich bei dem Kunden um einen Gasverbraucher handelt.

## Revendications

1. Système maritime de transport et de distribution de gaz naturel liquéfié GNL comprenant
- une grande entité d'approvisionnement en GNL
- au moins un petit transporteur de GNL (16) qui reçoit un approvisionnement en gaz naturel liquéfié GNL provenant de la grande entité d'approvisionnement en GNL et présente la capacité de s'ancrer dans des zones proches de la côte
- au moins une barge de transport de camions-citernes (17), comprenant
- un module de connexion pour connecter la barge au petit transporteur de GNL
- au moins un module de distribution de GNL
- au moins un module de chargement de GNL pour charger du GNL dans des camions-citernes (18) alimenté par le module de distribution de GNL
- des moyens d'accès à la barge de camions-citernes
- des moyens de sortie de barge de camions-citernes
dans lequel la barge de transport de camions-citernes se déplace entre le petit transporteur de GNL (16) et le port (19), où le quai aménagé à terre rend plus facile le départ et le retour ultérieur des camions-citernes (18) pour la distribution de GNL auprès de clients finaux.

2. Système maritime de transport et de distribution de gaz naturel liquéfié GNL selon la revendication 1, **caractérisé en ce que** la grande entité d'approvisionnement en GNL est un grand méthanier (4) (15) présentant une capacité de transport de GNL de plus de 30 000 m³.

3. Système maritime de transport et de distribution de gaz naturel liquéfié GNL selon la revendication 1, **caractérisé en ce que** la grande entité d'approvisionnement en GNL est un terminal d'exportation de GNL.

4. Système maritime de transport et de distribution de gaz naturel liquéfié GNL selon la revendication 1, **caractérisé en ce que** la grande entité d'approvisionnement en GNL fournit un approvisionnement à au moins un petit transporteur de GNL (16) qui est situé à proximité de la côte ou des îles de la zone d'influence d'approvisionnement en GNL.

5. Système maritime de transport et de distribution de gaz naturel liquéfié GNL selon la revendication 1, **caractérisé en ce que** le au moins un petit transporteur de GNL (16) présente une capacité de transport de GNL inférieure à 30 000 m³.

6. Système maritime de transport et de distribution de gaz naturel liquéfié GNL selon les revendications 1 et 5, **caractérisé en ce que** la barge (17) de transport de camions-citernes se déplace entre le petit transporteur de GNL (16) et les différents quais ou postes de déchargement de camions-citernes sur la côte ou dans les îles où l'approvisionnement doit être fourni, ce qui rend plus facile pour des camions-citernes chargés de GNL (18) de descendre de la barge (17) de transport de camions-citernes et pour les camions-citernes déchargés (18) de retourner sur la barge (17) de transport de camions-citernes.

7. Système maritime de transport et de distribution de gaz naturel liquéfié GNL selon la revendication 6, **caractérisé en ce que** le camion-citerne chargé de GNL (18) approvisionne sa charge dans des centres de consommation (7) qui sont à la fois des clients de GNL et de gaz.

8. Système maritime de transport et de distribution de gaz naturel liquéfié GNL selon la revendication 7, **caractérisé en ce que** le client est un consommateur de GNL.

9. Système maritime de transport et de distribution de gaz naturel liquéfié GNL selon la revendication 7, **caractérisé en ce que** le client est un consommateur de gaz.
